Europäisches Patentamt

European Patent Office

Office européen des brevets

(19)

(11) Numéro de publication : **0 491 577 A1**

# (12) DEMANDE DE BREVET EUROPEEN

(21) Numéro de dépôt : **91402952.5**

(22) Date de dépôt : **05.11.91**

(51) Int. Cl.⁵ : **B65G 35/06, B61B 13/12**

(30) Priorité : **19.11.90 FR 9014350**

(43) Date de publication de la demande :
**24.06.92 Bulletin 92/26**

(84) Etats contractants désignés :
**AT BE CH DE DK ES FR GB GR IT LI LU NL SE**

(71) Demandeur : **TELEFLEX SYSTEMS S.A.**
**32-34, rue Robert-Witchitz, B.P. 229**
**F-94203 Ivry-sur-Seine Cédex (FR)**

(72) Inventeur : **Haquet, Guy Georges Auguste**
**18 rue du Docteur Plichon**
**F-94000 Creteil (FR)**

(74) Mandataire : **Lhuillier, René et al**
**Cabinet Lepeudry, 52, avenue Daumesnil**
**F-75012 Paris (FR)**

(54) **Transporteur à chariot tracté par un arbre tournant sur lui-même.**

(57)  La voie de roulement est constituée d'une poutre profilée (1) munie de rainures longitudinales dont des rainures latérales servent de support à un rail de roulement (2) débordant de la poutre. Un chariot (5) en forme de U dont les parois latérales s'étendent de part et d'autre des faces opposées de la poutre, porte des boîtiers de roulement (3) équipés chacun d'une roulette à gorge centrale et axe vertical, appliquée sur ledit rail de roulement. Des galets d'entraînement pivotables, fixés au chariot sont en contact avec un arbre tournant (7) et entraînent le chariot à se déplacer sur le rail à une vitesse déterminée par l'angle des galets sur l'arbre.

Applications notamment aux transporteurs légers adaptables à toutes installations.

FIG.1

EP 0 491 577 A1

L'invention qui se rapporte aux chariots, tractés à l'aide d'un arbre tournant sur lui-même, et utilisant des galets d'entraînement pivotables prenant appui sur ledit arbre, concerne plus précisément l'agencement particulier d'un chariot, l'autorisant à se déplacer, selon toutes orientations, sur une poutre profilée.

Dans le domaine de la manutention de charges, on utilise depuis longtemps un système de transporteur constitué de chariots guidés qui se déplacent individuellement à des vitesses ajustables sur des rails ou profilés de guidage, et qui sont entraînés par un arbre tournant sur lui-même, s'étendant à proximité et tout au long du circuit de déplacement. Des galets d'entraînement pivotables, fixés au chariot sont en contact avec l'arbre sous l'action de ressorts, et entraînent le chariot à une vitesse déterminée par l'angle des galets sur l'arbre. Quand l'angle est de zéro degré, les galets tournent sur place et le chariot reste stationnaire, mais quand l'angle est modifié, une poussée se développe et il en résulte une mise en vitesse progressive. Cette modification est habituellement assumée par des cames fixes disposées et orientées de façon appropriée aux endroits où le chariot doit subir des variations de vitesse dont l'accélération et la décélération sont ainsi correctement contrôlées.

Pour que les galets d'entraînement ne patinent pas sur l'arbre quand la charge du chariot est importante, il est prévu des ressorts qui appliquent ces galets sur l'arbre, ressorts qui exercent évidemment une réaction en sens inverse sur le chariot. Cette réaction est sans importance sur un chariot se déplaçant à vide, dans les installations classiques, par contre si l'on envisage d'appliquer ce mode d'entraînement à des chariots de faible poids, il faut trouver une compensation à cette force de réaction qui risquerait de faire sortir le chariot de son guidage. D'autre part, dans les installations classiques utilisant ce mode d'entraînement connu, les chariots se déplacent au-dessus de voies de roulement horizontales, mais ne sont généralement pas suspendus à ces voies, et encore moins accrochés à elles sur l'un de leur côté. En outre les installations connues se prêtent difficilement aux déplacements de chariots sur des plans inclinés et à fortiori verticalement à la façon d'un élévateur. On recherche de plus en plus à standardiser les systèmes de transporteur, notamment les transporteurs légers pour les rendre rapidement adaptables à toutes installations.

Dans ce but, la Demanderesse a imaginé un nouveau type de chariot qui coopère avec une poutre profilée d'un type particulier, qui permet audit chariot de se déplacer selon toutes les orientations possibles par rapport à ladite poutre qui constitue sa voie de roulement, c'est-à-dire au-dessus, au-dessous, ou sur l'un des côtés de la poutre. De plus ce type de chariot peut se déplacer sur une poutre horizontale ou inclinée, voire verticale, et il bénéficie du mode d'entraînement privilégié et souple à galet d'entraînement et arbre tournant en s'affranchissant des problèmes inhérents à la réaction du ressort d'application du galet vis-à-vis du chariot.

Le principal objet de la présente invention consiste donc en un transporteur à chariot tracté par un arbre tournant sur lui-même et s'étendant le long de la voie de roulement, dont le chariot est équipé d'au moins un galet d'entraînement pivotable appliqué sur l'arbre par un ressort, transporteur selon lequel la voie de roulement est constituée d'une poutre profilée munie sur tout son pourtour d'une pluralité de rainures longitudinales, dont au moins deux rainures disposées respectivement sur deux faces opposées de la poutre, et l'une en face de l'autre, servent de support à un rail du roulement débordant au-dessus des faces latérales de la poutre et selon lequel un chariot en forme de U dont les deux parois latérales s'étendent de part et d'autre desdites deux faces opposées de la poutre, porte sur lesdites parois des boîtiers de roulement équipés chacun d'au moins une roulette à gorge centrale et à axe vertical, qui est appliqué sur le rail de roulement, qui peut être avantageusement emmanché à force dans un profilé longitudinal lui servant de support, engagé dans une rainure longitudinale.

Selon une caractéristique particulière de l'invention le fond du chariot supporte une chape pivotable porteuse du galet d'entraînement qui vient en appui contre l'arbre tournant s'étendant longitudinalement sous la poutre. L'arbre tournant est entraîné en rotation par l'intermédiaire d'une courroie de transmission qui traverse la poutre, par un moteur monté sur la poutre, du côté opposé à l'arbre tournant.

D'autres caractéristiques particulières et avantages de l'invention ressortiront de la description qui va suivre d'une forme particulièrement avantageuse de l'invention qui doit cependant n'être considérée que comme un exemple non limitatif de réalisation.

Il y sera fait référence aux dessins annexés qui représentent :

Figure 1 une vue en perspective d'une partie d'un transporteur avec un chariot mobile.

Figure 2 une vue en élévation à partir d'une extrémité de la poutre constituant la voie de roulement.

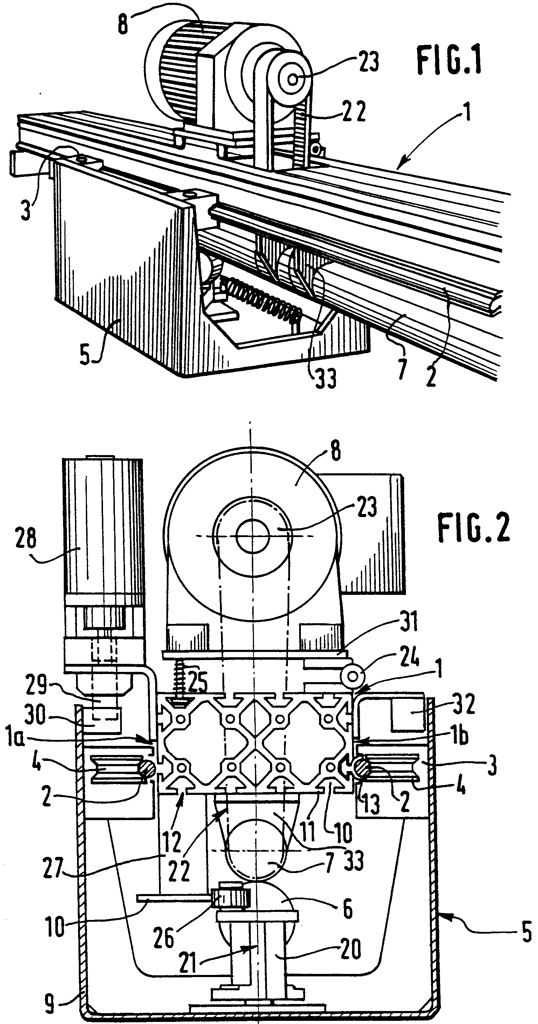

La voie de roulement visible sur les figures est constituée d'une poutre profilée désignée dans son ensemble par la référence 1. Sa section droite est de forme générale rectangulaire et elle est, de façon connue en soi, pourvue sur ses quatre faces de rainures longitudinales 10 de profil triangulaire, chacune partiellement formée par des rebords latéraux 11, délimitant entre eux une fente longitudinale 12. Ces rainures profilées 10 permettent d'y engager différentes pièces, notamment des joncs d'habillage et des écrous de fixation, et elles peuvent servir de guide à des organes déplaçables. Dans la représentation de la figure 1, la poutre 1 est disposée à plat et possède quatre rainures 10 sur ses faces supérieures et inférieures et deux rainures sur chacune des faces latérales. La rainure inférieure de chacune de ces faces latérales 1a et 1b reçoit un profilé longitudinal 13 qui sert de support à un arbre fixe 2 constituant un rail de roulement qui déborde au-dessus des faces latérales de la poutre. Le rail peut être emmanché à force dans le profilé formant griffe. Sur chaque rail 2, donc de part et d'autre de la poutre 1, peuvent se déplacer deux boîtiers mobiles 3 équipés intérieurement à cet effet de roulettes 4 à gorge centrale et à axe vertical solidaires des boîtiers. Les flancs des roulettes de part et d'autre de la gorge centrale coiffent le rail de roulement 2, interdisant le dégagement du boîtier vers le haut ou vers le bas.

Les deux boîtiers 3 respectivement de chaque côté de la poutre font partie intégrante ou sont fixés à un corps de chariot 5 de section droite en forme de U. On voit que les boîtiers 3 sont fixés intérieurement à la partie supérieure des parois latérales du chariot 5 s'étendant de part et d'autre des faces opposées (1a, 1b) de la poutre, et dont le fond horizontal 9 est assez sensiblement écarté de la poutre. Cet espace ainsi ménagé entre le chariot et la poutre permet de fixer sur le fond 9 au moins une chape 20 servant à supporter un galet d'entraînement 6 à axe horizontal, la chape 20 étant elle-même pivotable selon un axe vertical 21 pour que le galet puisse prendre toutes orientations par rapport à la direction longitudinale de la poutre. Le galet 6 est en appui contre un arbre tournant 7 s'étendant longitudinalement sous la poutre 1, grâce à un ressort non représenté interne à la chape. L'arbre 7, monté sur des paliers 33 disposés de place en place sous la poutre est entraîné en rotation par une courroie de transmission 22 traversant la poutre 1, et tendue sur la poulie tournante 23 d'un moteur d'entraînement 8 qui est fixé sur la poutre du côté opposé à l'arbre tournant par l'intermédiaire d'une platine support 31. Celle-ci prend appui latéralement sur une articulation 24 dont la manœuvre permet de régler la tension de la courroie, le blocage s'effectuant à l'aide d'une vis 25, placée du côté opposé à l'articulation 24.

L'orientation de la chape 20 porteuse du galet 6 est assurée par une came 10, disposée à l'endroit voulu de la voie de roulement, dont la tête 26 fait pivoter la chape 20 quand le chariot arrive à son niveau. On dispose avantageusement d'au moins une came 10, à chaque extrémité de la poutre, pour assurer le pivotement complet du galet 6 et l'arrêt du chariot. Un support 27 de ladite came est donc fixé à l'endroit choisi, sous la poutre 1. La poutre de roulement est également équipée en certains endroits de vérins de blocage 28 dont la tige rétractable 29 peut coopérer, avec une butée 30 solidaire du chariot 5, et l'immobiliser sur demande à l'emplacement correspondant, des contacts de fin de course 32 étant aussi prévus sur la voie. On voit notamment à la figure 2 que la pression exercée par le galet 6 sur l'arbre 7, due à la force du ressort, ne provoque pas de réaction en sens inverse sur le chariot puisque celui-ci est ancré à la poutre par l'intermédiaire des boîtiers 3 et de leur roulette à gorge 4 qui bloque le chariot à la fois vers le haut et vers le bas. Cette disposition avantageuse autorise le fonctionnement du transporteur selon toutes orientations. Ainsi le chariot peut-il être suspendu sous la poutre comme le représentent les figures, ou alors il roule au-dessus de la poutre selon une position inversée par rapport à la précédente, ou encore il peut circuler sur un côté de la poutre. Une telle disposition se prête aussi au déplacement d'un chariot sur une poutre inclinée, voire verticale, à la façon d'un élévateur, et rend le transporteur adaptable à de multiples utilisations.

**Revendications**

1.- Transporteur à chariot tracté par un arbre tournant sur lui-même et s'étendant le long de la voie de roulement, dont le chariot est équipé d'au moins un galet d'entraînement pivotable appliqué sur l'arbre par un ressort, caractérisé en ce que la voie de roulement est constituée d'une poutre profilée (1) munie sur tout son pourtour d'une pluralité de rainures longitudinales (10), dont au moins deux rainures disposées respectivement sur deux faces opposées (1a, 1b) de la poutre, et l'une en face de l'autre, servent de support à un rail de roulement (2) débordant au-dessus des faces latérales de la poutre, et en ce que un chariot (5) en forme de U dont les deux parois latérales s'étendent de part et d'autre desdites deux faces opposées de la poutre, porte sur lesdites parois des boîtiers de roulement (3) équipés chacun d'au moins une roulette (4) à gorge centrale et à axe vertical, qui est appliquée sur le rail de roulement.

2.- Transporteur selon la revendication 1, caractérisé en ce que le rail de roulement (2) est emmanché à force dans un profilé longitudinal (13) lui servant de support, engagé dans une rainure longitudinale (10).

3.- Transporteur selon la revendication 1, caractérisé en ce que le fond (9) du chariot (5) supporte une chape pivotable (20) porteuse du galet d'entraînement (6) qui vient en appui contre l'arbre tournant (7) s'étendant longitudinalement sous la poutre (1).

4.- Transporteur selon les revendications 1 et 3, caractérisé en ce que l'arbre tournant (7) est entraîné en rotation par l'intermédiaire d'une courroie de transmission (22) traversant la poutre (1), par un moteur (8) monté sur la poutre, du côté opposé à l'arbre tournant.

5.- Tranporteur selon la revendication 4, caractérisé en ce que la platine-support (31) du moteur (8) prend appui sur la poutre (1) par l'intermédiaire d'une articulation latérale (24) pour le réglage de la tension de la courroie.

6.- Transporteur selon les revendications 4 et 5, caractérisé en ce qu'au moins une vis (25), du côté opposé à l'articulation (24) assure la blocage de la platine (31) sur la poutre (1).

FIG.1

FIG.2

EP 0 491 577 A1

**Office européen
des brevets**

**RAPPORT DE RECHERCHE EUROPEENNE**

Numero de la demande

EP    91 40 2952

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | GB-A-2 110 621 (SI HANDLING SYSTEMS INC)<br>* page 1, ligne 69 - ligne 74; figure 1 *<br>* page 2, ligne 59 - ligne 88; figure 2 *<br>--- | 1-4 | B65G35/06<br>B61B13/12 |
| A | AU-B-555 610 (JACOBY & LINDQUIST)<br>* page 3, ligne 1 - ligne 8 *<br>* page 5, ligne 7 - ligne 10; figures 1,3 *<br>--- | 1,3 | |
| A | FR-A-2 645 131 (COUSSOT)<br>* page 5, ligne 13 - ligne 17 *<br>--- | 1,2 | |
| A | DE-A-3 635 065 (SCHMID & WENDZLER)<br><br>----- | | |

**DOMAINES TECHNIQUES RECHERCHES (Int. Cl.5 )**

B65G
B61B

Le présent rapport a été établi pour toutes les revendications

| Lieu de la recherche | Date d'achèvement de la recherche | Examinateur |
|---|---|---|
| LA HAYE | 20 FEVRIER 1992 | BEERNAERT J.E. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
----------------------------------------------------------
& : membre de la même famille, document correspondant

EPO FORM 1503 03.82 (P0402)